Europäisches Patentamt

European Patent Office

Office européen des brevets

(19)

(11) Numéro de publication : **0 142 406 B1**

(12) **FASCICULE DE BREVET EUROPÉEN**

(45) Date de publication du fascicule du brevet :
09.08.89

(21) Numéro de dépôt : 84402007.3

(22) Date de dépôt : 05.10.84

(51) Int. Cl.⁴ : **G 01 S 13/80, G 01 S 13/02**

(54) **Répondeur radar passif.**

(30) Priorité : 11.10.83 FR 8316140

(43) Date de publication de la demande :
22.05.85 Bulletin 85/21

(45) Mention de la délivrance du brevet :
09.08.89 Bulletin 89/32

(84) Etats contractants désignés :
DE GB IT NL SE

(56) Documents cités :
DE—A— 3 010 264
FR—A— 1 489 713
US—A— 3 391 404
US—A— 3 568 194
US—A— 4 075 632
US—A— 4 278 977

(73) Titulaire : LMT RADIO PROFESSIONNELLE
46-47, Quai Alphonse Le Gallo
F-92103 Boulogne-Billancourt (FR)

(72) Inventeur : Carof, Alain
THOMSON-CSF SCPI 173, bld Haussmann
F-75379 Paris Cedex 08 (FR)
Inventeur : Marchand, Maurice
THOMSON-CSF SCPI 173, bld Haussmann
F-75379 Paris Cedex 08 (FR)

(74) Mandataire : Chaverneff, Vladimir et al
THOMSON-CSF SCPI
F-92045 PARIS LA DEFENSE CEDEX 67 (FR)

## Description

La présente invention se rapporte aux répondeurs radar passifs qui permettent de renvoyer vers un radar Doppler, une fraction beaucoup plus importante de signaux émis par celui-ci que celle due à la réflexion naturelle sur les obstacles les plus réfléchissants.

Il est connu d'utiliser comme réflecteur passif un trièdre rectangulaire du type « coin de cube », ou une lentille de Lunebourg.

De manière plus élaborée, on sait utiliser un réseau de dipoles connectés ensemble pour être en phase et reliés à un court-circuit. Le signal radar reçu est réémis au rythme de cette manipulation dans une direction déterminée par l'antenne équivalente au réseau de dipoles. Ce réseau peut être constitué pour de très courtes fréquences par un simple circuit triplaque sur lequel les dipoles sont photogravés. C'est ainsi qu'en bande X avec $8 \times 8$ dipoles répartis sur une plaque d'environ $30 \times 30$ cm$^2$ on obtient un lobe principal de réponse d'ouverture 8°. Une telle directivité est particulièrement utile quand on souhaite localiser un point avec discrétion.

On connaît d'après le document US-A-3 568 194 un dispositif visant à dégrader fortement la « signature » radar d'une cible pour empêcher sa reconnaissance, ce dispositif utilisant une diode augmentant légèrement la réflectivité du guide d'ondes dans lequel elle est placée, les ondes qu'elle réfléchit étant modulées en phase.

Par ailleurs, on connaît d'après le document US-A-3 391 404 un répondeur coopérant avec un radar non-Doppler et ne réalisant qu'une modulation d'amplitude. On connaît d'après le document US-A-4 278 977 un répondeur coopérant avec un interrogateur radio.

Lorsqu'on élimine les échos fixes, notamment en utilisant l'effet Doppler, il faut moduler la réémission pour simuler un mouvement du répondeur.

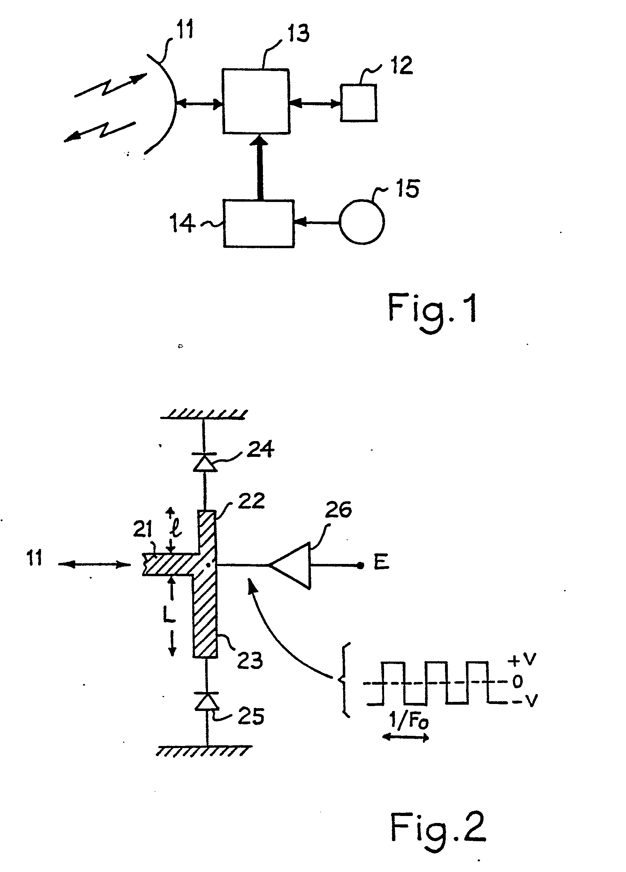

Pour cela on utilise un système semblable à celui illustré schématiquement par la figure 1.

L'onde reçue du radar par l'antenne 11 est réfléchie par un court-circuit 12 vers cette même antenne par l'intermédiaire d'un déphaseur commandable 13. Elle repart donc depuis l'antenne vers le radar avec une phase qui dépend de l'état du déphaseur. Cet état est commandé par un circuit de commande 14 qui fonctionne à partir d'un oscillateur de référence 15.

Le déphaseur 13 est par exemple du type représenté en figure 2. La connexion avec l'antenne 11 se fait par l'intermédiaire d'un guide 21. Celui-ci aboutit à deux portions de guide 22 de longueur 1 et 23 de longueur L qui sont à angle droit avec lui et sont reliées à la masse respectivement par deux diodes 24 et 25 connectées en sens contraire. La jonction de ces trois guides est reliée à la sortie d'un amplificateur 26 qui est monté en écrêteur de manière à délivrer un signal de sortie pouvant prendre l'une des deux valeurs

$+ V$ et $- V$ permettant de saturer respectivement les deux diodes. Pour cela l'amplificateur reçoit sur son entrée E par exemple un signal binaire à la fréquence Fo, dont l'un des états correspond à $+ V$ et l'autre à $- V$.

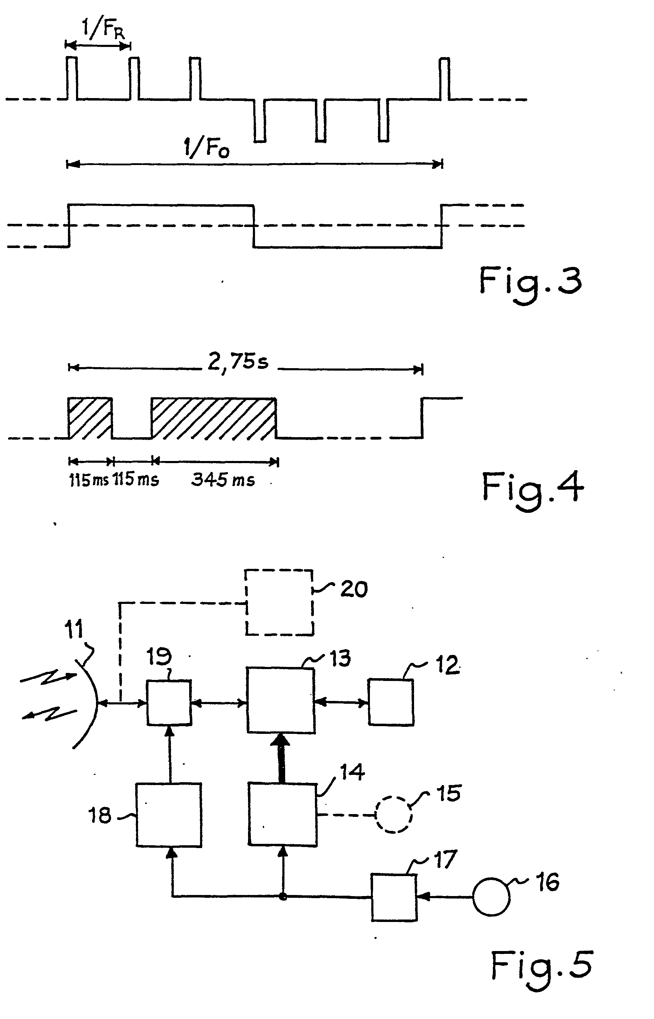

Dans ces conditions quand une diode est saturée le guide correspondant est court-circuité à la masse, et il est déconnecté en sens inverse. Ainsi l'écart de phase de l'onde hyperfréquence réémise entre ces deux états est égale à, $\lambda$ étant la longueur d'onde hyperfréquence, $2\,\pi(L - 1)/\lambda$. Le signal maximum détecté par effet Doppler dans le radar sera obtenu pour un écart de phase égal à $\pi$, qui correspond donc à $L - 1 = \lambda/2$. En effet, comme représenté en haut de la figure 3, après discrimination le signal reçu comprend alors des impulsions à la fréquence de récurrence $F_R$, d'amplitude maximale et de polarités inversées à la fréquence $F_0$. Le signal Doppler de sortie sera donc, comme représenté en bas de cette figure 3, un signal carré de fréquence $F_0$ qui reproduit le signal de modulation en entrée E du déphaseur 13.

Il est facile de prendre pour cette fréquence $F_0$ une valeur audible, particulièrement facile à exploiter. Cette valeur sera alors celle fournie par le générateur 15.

Pour individualiser encore plus le répondeur, cette fréquence audible peut être découpée, par exemple à l'aide de circuits logiques contenus dans le modulateur 14 et fonctionnant eux aussi à partir du générateur 15, pour représenter un signal particulier. La figure 4 représente par exemple une modulation s'étendant sur 2,75 secondes et correspondant à la lettre A en code Morse. Sur cette figure, les parties hachurées correspondent à la fréquence audible, et les autres à des silences pendant lesquels le déphaseur 13 est dans un état fixe.

Une telle balise permet donc de signaliser un point particulier. Il est souhaitable qu'un opérateur utilisant la balise puisse transmettre des messages non déterminés à l'avance. Il pourrait pour cela utiliser par exemple une clef Morse comme interrupteur entre le générateur 15 et le déphaseur 13. Un tel procédé est long et difficile à mettre en œuvre.

Pour transmettre notamment des messages vocaux, l'invention propose de moduler le signal réémis, en phase par la fréquence du signal vocal et en amplitude par l'enveloppe de celui-ci.

Le répondeur radar passif selon la présente invention est du type coopérant avec un radar Doppler et comprenant une antenne accordée sur le signal à réémettre, un court-circuit hyperfréquence relié à cette antenne par un déphaseur commandable, et des moyens pour commander ce déphaseur à partir d'un signal vocal, est caractérisé en ce qu'il comprend en outre un atténuateur commandable inséré entre l'antenne et le déphaseur, et des moyens pour commander cet atténuateur, ces moyens comportant un détecteur isolant l'enveloppe du signal vocal dont la phase commande ledit déphaseur.

D'autres particularités et avantages de l'invention apparaîtront clairement dans la description suivante présentée à titre d'exemple non limitatif et faite en regard des figures annexées qui représentent :

la figure 1, le schéma d'un répondeur connu ;

la figure 2, le schéma du déphaseur 13 de la figure 1 ;

la figure 3, un diagramme des signaux dans le répondeur de la figure 1 ;

la figure 4, un exemple de codage des signaux retransmis ;

la figure 5, un schéma d'un répondeur selon l'invention ;

la figure 6, un diagramme des signaux dans le répondeur de la figure 5 ;

la figure 7, la courbe de réponse de l'atténuateur 19 de la figure 5.

Pour transmettre des informations vocales avec un répondeur passif, on modifie le schéma de la figure 1 pour aboutir au schéma de la figure 5.

Le système de base comprend toujours l'antenne 11, le court-circuit 12, le déphaseur 13, le modulateur 14 et le générateur 15.

Les informations vocales sont appliquées à un microphone 16 qui délivre un signal, lequel est ensuite filtré par un filtre passe bas 17. La fréquence de coupure de ce filtre est inférieure à $F_R/2$ pour éviter des problèmes de repliement de spectre. Ceci suppose que la fréquence de répétition $F_R$ du radar soit suffisamment haute pour garder une bonne intelligibilité à la parole. C'est généralement le cas.

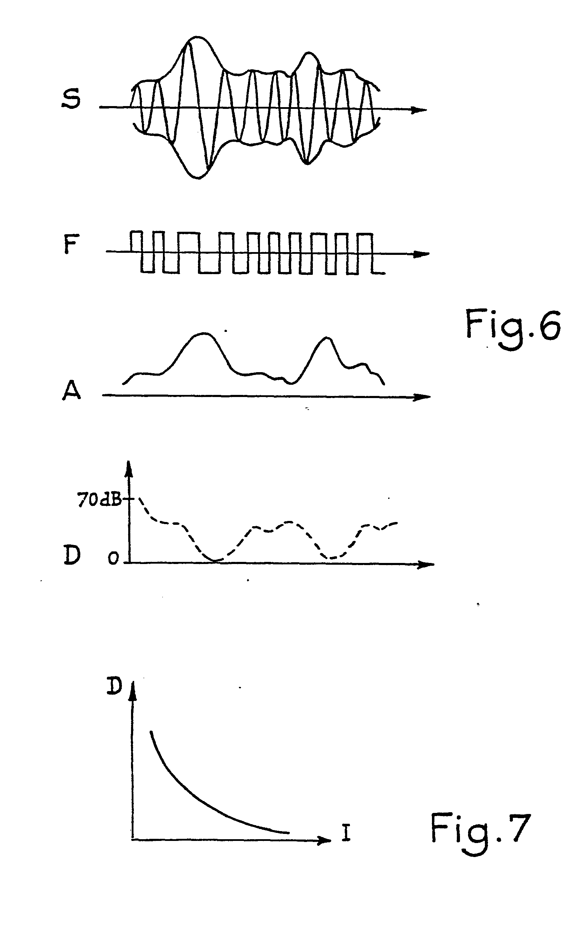

Le signal S en sortie du filtre est représenté sur la première ligne de la figure 6. Il peut être décrit comme un signal alternatif de période et d'amplitude variables. La variation d'amplitude est lente devant la période et détermine donc une enveloppe qui ressemble grossièrement à une modulation d'amplitude.

Ce signal S est d'abord appliqué au modulateur 14 dans lequel il est écrêté pour obtenir un signal rectangulaire de commande du déphaseur 13. Ce signal S écrêté devient un signal F représenté en deuxième ligne de la figure 6. Les transitions de F correspondent aux passages à zéro de S, et F est donc semblable à un signal modulé du type PDM.

Le signal réémis par le répondeur est donc modulé en phase par le signal F, le radar reconstitue ce dernier par démodulation du signal réémis. Tel que ce signal pourrait être intelligible, mais difficilement et avec une très mauvaise sonorité.

Pour améliorer cette intelligibilité, on transmet en plus l'amplitude de S en modulant en amplitude le signal retransmis par le répondeur.

Pour garder toute la simplicité de ce répondeur, on n'effectue pas en fait une vraie modulation du signal retransmis, mais une simple atténuation grossièrement proportionnelle à l'enveloppe de S.

Cette amplitude A est représentée en troisième ligne de la figure 6 et peut être obtenue très simplement par un détecteur d'enveloppe 18.

Pour moduler le signal de réémission on insère entre le déphaseur 13 et l'antenne 11 un atténuateur variable 19 dont l'atténuation est une fonction inverse sensiblement linéaire du signal de commande ; ce dernier étant le signal A délivré par le détecteur 18. Un tel atténuateur peut être formé par une diode commandée en courant et dont l'atténuation en hyperfréquence est représentée par le graphique de la figure 7, où l'on constate que cette atténuation D est une fonction grossièrement inverse du courant direct 1.

En fonction du signal A, l'atténuation D du signal retransmis est représenté par la dernière ligne de la figure 6 où l'on voit que celle-ci reproduit assez fidèlement l'inverse de A avec une dynamique de 70dB. Comme il s'agit d'une atténuation, le signal retransmis aura une enveloppe sensiblement représentée par A.

A la réception dans le radar il suffira donc d'extraire l'amplitude du signal reçu, disponible par exemple sur une sortie de CAG, et de moduler en amplitude le signal F reconstitué, par exemple avec un amplificateur à gain variable, pour obtenir un signal qui reproduit le signal vocal S avec une fidélité très suffisante.

Dans une variante, on utilise en outre un générateur 15 de signal carré de fréquence fixe qui permet de moduler de manière constante la réémission du répondeur en dehors des moments où l'on utilise le micro 16.

Dans une autre variante on utilise également un récepteur 20 pour déterminer si l'on reçoit bien une émission du radar, ce qui permet alors de ne pas parler dans le micro en pure perte.

Ce récepteur peut être une simple diode redresseuse alimentant un voyant. Il peut aussi être plus complexe et comporter par exemple un décodeur permettant de décoder une interrogation codée émise par le radar. Une version encore plus élaborée comporte un récepteur semblable à celui utilisé dans le radar pour démoduler la réémission du répondeur. Dans ce cas le radar peut émettre une émission modulée de la même manière que dans le répondeur, ce qui permet une liaison vocale bi-directionnelle entre le radar et le répondeur. On n'utilise alors qu'un matériel très simple dans ce dernier et seule l'énergie fournie par le radar sert à la transmission dans les deux sens.

## Revendications

1. Répondeur radar passif, du type coopérant avec un radar Doppler et comprenant une antenne (11) accordée sur le signal à réémettre, un court-circuit (12) hyperfréquence relié à cette antenne par un déphaseur (13) commandable, et des moyens (14) pour commander ce déphaseur à partir d'un signal vocal (16), caractérisé en ce qu'il comprend en outre un atténuateur commandable (19) inséré entre l'antenne (11) et le déphaseur (13), et des moyens (18) pour commander cet atténuateur, ces moyens comportant un détecteur isolant l'enveloppe du signal vocal dont la phase commande ledit déphaseur.

2. Répondeur selon la revendication 1, caractérisé en ce qu'il comprend des moyens (16) pour recevoir un signal vocal et le convertir en un signal électrique, un filtre passe-bas (17) pour filtrer ce signal avec une fréquence de coupure au plus égale à la moitié du signal de récurrence du radar, que les moyens de commande du déphaseur comprennent un écrêteur (14) permettant de transformer le signal filtré en un signal rectangulaire bipolaire permettant de commuter le déphaseur entre deux valeurs espacées de π correspondant respectivement aux deux polarités du signal rectangulaire, que le signal (S) dont on isole l'enveloppe est le signal de sortie dudit filtre passe-bas et que l'atténuateur (19) a une caractéristique d'atténuation sensiblement inversement proportionnelle à son signal de commande.

3. Répondeur selon la revendication 2, caractérisé en ce que l'atténuateur (19) comprend une diode hyperfréquence polarisée dans le sens passant par un courant proportionnel au signal d'enveloppe.

4. Répondeur selon l'une quelconque des revendications 1 à 3, caractérisé en ce qu'il comprend en outre un générateur (15) permettant d'alimenter les moyens (14) de commande du déphaseur (13) par une fréquence constante.

5. Répondeur selon l'une quelconque des revendications 1 à 4, caractérisé en ce qu'il comprend en outre un décodeur (20) pour détecter une caractéristique particulière de l'émission du radar.

6. Répondeur selon la revendication 5, caractérisé en ce que le décodeur (20) permet de décoder une modulation de même nature que celle apportée par le répondeur aux signaux réémis.

## Claims

1. A passive radar responder of the type cooperating with a doppler radar system and comprising an antenna (11) tuned to the signal to be re-transmitted, a hyperfrequency short circuit means (12) connected to such antenna by a controlled phase shifter (13) and means (14) in order to control this phase shifter in response to a vocal signal (16), characterized in that it comprises further a controlled attenuator (19) placed between the antenna (11) and the phase shifter (13) and means (18) in order to control this attenuator, such means comprising a detector for isolating the envelope of the vocal signal and whose phase controls the said phase shifter.

2. The responder as claimed in claim 1, characterized in that it comprises means (16) in order to receive a vocal signal and to convert it into an electrical signal, a low pass filter (17) in order to filter this signal with a cut off frequency at least equal to half the recurrent signal of the radar system, in that the means for controlling the phase shifter comprises a limiter (14) making it possible to transform the filtered signal into a bipolar rectangular signal and making it possible to switch the phase shifter between two values equal spaced by π corresponding respectively to the two polarities of the rectangular signal, in that the signal (S) whose envelope is isolated is the output signal of the said low pass filter and in that the attenuator (19) bas an attenuation characteristic substantially inversely proportional to the control signal.

3. The responder as claimed in claim 2, characterized in that the attenuator (19) comprises a hyperfrequency diode polarized in the conducting direction for a current proportional to the envelope signal.

4. The responder as claimed in any one of the claims 1 through 3, characterized in that it furthermore comprises a generator (15) making it possible to supply the control means (14) of the phase shifter (13) with a constant frequency.

5. The responder as claimed in any one of the claims 1 through 4, characterized in that it furthermore comprises a decoder (20) in order to detect a particular characteristic of the transmission of the radar system.

6. The responder as claimed in claim 5, characterized in that the decoder (20) makes it possible to decode a modulation of the same nature as that imparted by the responder to the re-transmitted signals.

## Patentansprüche

1. Passiver Radar-Antwortsender vom mit einem Doppler-Radar zusammenwirkenden Typ, welcher eine auf das wiederauszusendende Signal abgestimmte Antenne (11), einen HöchstfrequenzKurzschluß (12), der über einen steuerbaren Phasenschieber (13) mit dieser Antenne verbunden ist, sowie Mittel (14) zur Steuerung dieses Phasenschiebers ausgehend von einem Sprachsignal (16) umfaßt, dadurch gekennzeichnet, daß er ferner ein steuerbares Dämpfungsglied (19), welches zwischen der Antenne (11) und dem Phasenschieber (13) eingefügt ist, sowie Mittel (18) zur Steuerung dieses Dämpfungsgliedes umfaßt, wobei diese Mittel einen die Hüllenkurve des Sprachsignals herauslösenden Detektor umfassen, deren Phase diesen Phasenschieber steuert.

2. Antwortsender nach Anspruch 1, dadurch gekennzeichnet, daß er Mittel (16) zum Empfangen eines Sprachsignals und zur Umwandlung desselben in ein elektrisches Signal sowie ein Tiefpaßfilter (17) zum Filtern dieses Signals mit einer Grenzfrequenz umfaßt, die höchstens gleich der Hälfte des Radar-Wiederholungssignals ist, daß die Mittel zur Steuerung des Phasenschiebers einen Begrenzer (14) umfassen, der es ermöglicht, das gefilterte Signal in ein bipolares Rechtecksignal umzuwandeln, das die Umschaltung des Phasenschiebers zwischen zwei um π beabstandeten Werten ermöglicht, welche jeweils den beiden Polaritäten des Rechtecksignals entsprechen, daß das Signal (S), woraus die Hüllenkurve herausgelöst wird, das Ausgangssignal des Tießpaßfilters ist und daß das Dämpfungsglied (19) eine Dämpfungscharakteristik aufweist, das seinem Steuersignal im wesentlichen umgekehrt proportional ist.

3. Antwortsender nach Anspruch 2, dadurch gekennzeichnet, daß das Dämpfungsglied (19) eine Höchstfrequenzdiode umfaßt, die in Durchlaßrichtung durch einen dem Hüllenkurvensignal proportionalen Strom gepolt wird.

4. Antwortsender nach einem der Ansprüche 1 bis 3, dadurch gekennzeichnet, daß er ferner einen Generator (15) umfaßt, welcher die Speisung der Mittel (14) zur Steuerung des Phasenschiebers (13) mit einer konstanten Frequenz ermöglicht.

5. Antwortsender nach einem der Ansprüche 1 bis 4, dadurch gekennzeichnet, daß er ferner einen Dekodierer (20) zum Erfassen einer besonderen Charakteristik der Radarsendung umfaßt.

6. Antwortsender nach Anspruch 5, dadurch gekennzeichnet, daß der Dekodierer (20) die Dekodierung einer Modulation ermöglicht, die von gleicher Art wie diejenige ist, welche der Antwortsender auf die wiederausgesendeten Signale anwendet.

Fig.1

Fig.2

$1/F_R$

$1/F_O$

Fig.3

2,75 s

115 ms 115 ms 345 ms

Fig.4

20

11

19

13

12

18

14

15

17

16

Fig.5

S

F

## Fig.6

A

70dB

D   o

D

I   Fig.7